# EUROPÄISCHE PATENTSCHRIFT

(11) **EP 2 131 469 B1**
(45) Veröffentlichungstag und Bekanntmachung des Hinweises auf die Patenterteilung: **27.02.2013**
(21) Anmeldenummer: 09450111.1
(22) Anmeldetag: 04.06.2009
(51) Int. Cl.: H02J 3/14, H02J 7/00

(54) **Verfahren und System zum Regeln der Leistung des Ladens einer Batterie**
Method and system to control the power by which a battery is charged
Procédé et système de réglage de la puissance du chargement d'une batterie

(30) Priorität: 05.06.2008 AT 9042008
(43) Veröffentlichungstag der Anmeldung: 09.12.2009
(73) Patentinhaber: Andexlinger, Erich, 4614 Marchtrenk (AT)
(72) Erfinder: Andexlinger, Erich, 4614 Marchtrenk (AT)
(74) Vertreter: Margotti, Herwig Franz

(56) Entgegenhaltungen:
- DE-A1-102005 025 954
- US-A- 5 349 535
- US-A- 5 548 200
- US-A1- 2008 052 550
- US-A1- 2008 116 848

## Beschreibung

Die Erfindung betrifft ein Verfahren zum Regeln der Leistung des Ladens einer Batterie in einem elektrischen Netz, für das eine maximale Anschlussleistung definiert ist.

Die Erfindung betrifft weiters ein System zum Regeln der Leistung des Ladens einer Batterie in einem elektrischen Netz, für das eine maximale Anschlussleistung definiert ist.

Batterieladeverfahren und -systeme sind im Zusammenhang mit batteriebetriebenen Fahrzeugen bekannt. Ein solches System ist beispielsweise Bestandteil einer konventionellen Tankstelle. Die Tankstelle oder präziser die elektrischen Einrichtungen der Tankstelle bilden ein mit elektrischer Leistung zu versorgendes Netz, für das eine maximale elektrische Anschlussleistung definiert ist. Bei einer solchen Tankstelle hat ein Betreiber eines batteriebetriebenen Fahrzeuges die Möglichkeit sein Fahrzeug an eine der Steckdosen anzuschließen und die Batterien des Fahrzeuges aufzuladen. Dabei kommt ein in dem Fahrzeug integriertes Ladegerät zum Einsatz, das den Ladevorgang derart steuert, dass die Batterien möglichst rasch aufgeladen werden, wobei immer die maximale Ladeintensität, also die maximale Ladeleistung verwendet wird.

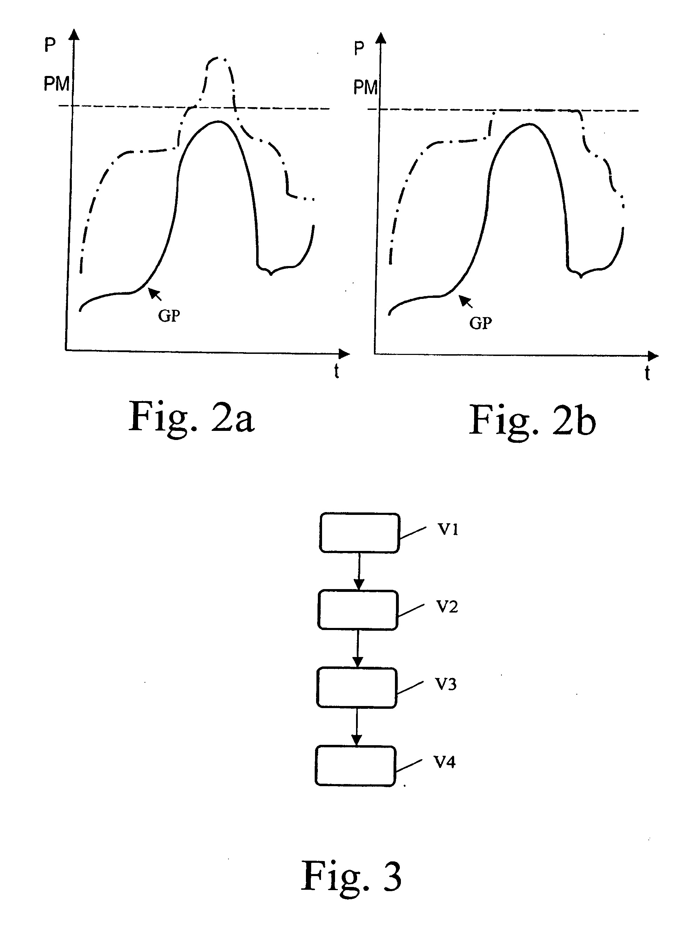

Diese Ladestrategie hat jedoch entscheidende Nachteile, weil ein möglichst rasches und vollständiges Aufladen von Akkumulatoren, wie beispielsweise Lithium-Ionen-Akkumulatoren, relativ viel Strom benötigt, was im elektrischen Netz der Tankstelle Leistungsspitzen verursachen kann, welche sogar den Anschlusswert oder anders ausgedrückt die maximale Anschlussleistung der betroffenen Tankstelle übersteigen können. Diese Situation wird beispielsweise noch weiter verschärft, wenn man davon ausgeht, dass mehrere Fahrzeuge gleichzeitig betankt werden sollen und jedes der Ladegeräte das Laden der jeweiligen Batterie derart steuert, dass die maximale Ladeintensität zum Einsatz kommt. Eine konventionelle Lösungsmöglichkeit für dieses Problem der überhöhten Leistungsaufnahme besteht darin, dass das Netz der Tankstelle bzw. der Anschlusswert tendenziell auf die beim Aufladen der Akkumulatoren zu erwartende Spitzenlast ausgelegt wird. Dies verursacht jedoch hohe netzbezogene Infrastrukturkosten pro Tankstelle, weil die elektrischen Einrichtungen der Tankstelle erneuert werden müssen. Nichtsdestotrotz müssen trotzdem auftretende zusätzlich Leistungsspitzen teuer am Markt zugekauft werden, wenn diese durch eine Überlagerung der Batterieladeleistung und anderer betrieblicher Umstände gegebenenfalls noch zu ungünstigen Tageszeiten verursacht werden und den zur Verfügung stehenden Anschlusswert überschreiten. Eine solche Situation ist in Fig. 2a dargestellt. Die unterbrochen gezeichnete Linie in dem Diagramm, in dem die Leistung über der Zeit aufgetragen ist, zeigt eine Leistungsspitze, welche die definierte Anschlussleistung PM übersteigt. Eine andere Lösung dieses Problems ist durch konventionelles Lastmanagement gegeben, das vorsieht, dass untergeordnete Verbraucher vom Netz genommen werden, wenn eine Überschreitung des Anschlusswertes droht. Obwohl diese Maßnahme zielführend sein kann, ist sie jedoch unpopulär, weil solche vom Netz genommenen Verbraucher für gewisse Zeiten nicht für betriebliche Zwecke verwendbar sind.

Aus dem Dokument US 5,548,200 ist eine Einrichtung zum Laden der Batterien von Elektrofahrzeugen bekannt, die mehrere Ladestationen aufweist, so dass mehrere Fahrzeuge entweder gleichzeitig oder nacheinander aufgeladen werden können.

Letztendlich verursachen unvorhersehbare Leistungsspitzen im elektrischen Versorgungsnetz eines Energieversorgungsunternehmens, an welches das Netz der Tankstelle angeschlossen ist, auch auf Seiten des Energieversorgers Probleme, weil diese Lastschwankungen bewältigt werden müssen.

Die Erfindung hat sich daher zur Aufgabe gestellt, ein System und ein Verfahren zum Regeln der Leistung des Ladens einer Batterie in einem elektrischen Netz, für das eine maximale Anschlussleistung definiert ist, zu verbessern und die vorstehend angeführten Probleme zu vermeiden.

Die Erfindung löst die vorstehend definierte Aufgabe dadurch, dass bei einem System und einem Verfahren zum Regeln der Leistung des Ladens einer Batterie in einem elektrischen Netz, für das eine maximale Anschlussleistung definiert ist, eine elektrische Leistungsaufnahme in dem mit elektrischer Leistung zu versorgenden Netz gemessen wird und die Leistung des Ladens der Batterie in Abhängigkeit von der gemessenen elektrischen Leistungsaufnahme geregelt wird, sodass die gemessene elektrische Leistungsaufnahme in dem Netz kleiner oder gleich der definierten maximalen Anschlussleistung ist.

Es werden Nutzungsdaten betreffend die jeweils zu ladende Batterie gesammelt. Solche Nutzungsdaten können beispielsweise die Betriebszeiten, die Betriebsfrequenz oder auch die Belastungszyklen oder die Art des mit elektrischer Energie zu versorgenden Fahrzeugs bzw. dessen Einsatzbereich umfassen, sodass beispielsweise Batterien, deren Nutzungsdaten auf eine relativ moderate Nutzung schließen lassen gegenüber Batterien mit intensiver Nutzung beim Zuteilen von Ladestrom hintangestellt werden können.

Ausgehend von den Nutzungsdaten, die bevorzugt in einem in die jeweilige Batterie oder dem jeweiligen Akkumulator integrierten Modul oder in einem Bordcomputer des jeweiligen Elektrofahrzeuges gesammelt und gespeichert werden, könne Auswertungen durchgeführt werden und basierend auf diesen Auswertungen eine bevorzugte Ladezeit und / oder ein bevorzugter Ladeort zum Beispiel für ein verteiltes Netzwerk von Tankstellen ermittelt werden, sodass der jeweiligen Nutzung am besten Rechnung getragen wird. In einer Variante der Erfindung kann vorgesehen sein, dass die elektrisch betriebenen Fahrzeuge über intelligente Kommunikationsmittel verfügen, mit deren Hilfe mit den zuvor erwähnten Computern kommuniziert werden kann. Dadurch lässt sich ein intelligentes Flottenmanagement realisieren, mit dessen Hilfe die individuellen Fahrzeuge dorthin dirigiert werden können, wo die von ihnen jeweils benötigte Batterieladeleistung zur Verfügung steht. Dies kann insbesondere in Kombination mit Navigationstechnologie geschehen.

Durch das Vorsehen dieser Maßnahmen ist auf vorteilhafte Weise erreicht, das die verfügbare Ladeleistung für Batterien den versorgungstechnischen Rahmenbedingungen im jeweiligen Netz angepasst wird. So können auf einfache Weise nicht nur einzelne Batterien sondern auch mehrere Batterien bzw. Batteriemodule gleichzeitig in dem Netz geladen werden, ohne dass während dem Ladevorgang mit einem unerwünschten Lastabwurf von untergeordneten Verbraucher oder mit teuren Überschreitungen der für das Netz definierten maximalen Anschlussleistung gerechnet werden muss. Es kann durch das Vorsehen dieser Maßnahmen bereits im Vorfeld, wie beispielsweise in der Planungsphase einer elektrischen Tankstelle oder bei der Adaptierung einer bestehenden Tankstelle auf Neuinvestitionen im Bereich des elektrischen Netzanschlusses oder des innerbetrieblichen elektrischen Netzes verzichtet werden. Weiters wird die energietechnische Versorgung eines solchen Netzes für das jeweils versorgende Energieversorgungsunternehmen planbarer.

Aus dem Dokument US 2008/0052550 A1 ist eine Stromversorgungseinheit bekannt, die eine einzelne externe Stromversorgung aufweist, welche als Brennstoffzelle oder Solarzelle ausgebildet ist. Ein Kennzeichen dieser externen Stromversorgung ist, dass - aufgrund ihres Innenwiderstands etc. - bei Erhöhung des Ausgangsstroms die Ausgangsspannung abfällt. Die externe Stromversorgung weist zusätzlich Schwankungen der Ausgangsleistung auf, die durch Temperaturänderungen oder Schwankungen der Sonnenbestrahlung verursacht sind. Ausgehend von diesen Charakteristiken der externen Stromversorgung wird eine Regelschaltung und eine diese Regelschaltung beinhaltende Stromversorgungseinheit vorgeschlagen, die durch Regelung des Ausgangsstroms der externen Stromversorgung die Ausgangsleistung der externen Stromversorgungseinrichtung erhöht und nahe an ein Maximum bringt.

In einer bevorzugten Ausgestaltung der Erfindung umfasst das Regeln der Leistung des Ladens der Batterie in Abhängigkeit von der gemessenen elektrischen Leistungsaufnahme eine Proportionalregelung. Man erreicht dadurch eine wesentlich höhere Effizienz als bei den bekannten Lastabwurfverfahren.

Gemäß einem weiteren Aspekt der Erfindung kann durch ein prioritätsabhängiges Zuweisen von Batterieladeleistung auch dem Wunsch einem von Prioritäten abhängigen Laden von Batterien nachgekommen werden, wie dies beispielsweise bei Batterien für Einsatzfahrzeuge oder in einem Geschäftsmodell der Fall sein kann, bei dem ein von Prioritäten abhängiges Zahlungsmodell für die bereitgestellte Ladeleistung zum Einsatz kommt.

Ein weiterer Aspekt der Erfindung betrifft das tageszeitabhängige Regeln der Batterieladeleistung. Insbesondere in Situationen, in denen die Gesamtleistungsaufnahme tageszeitliche Schwankungen aufweist, kann es vorteilhaft sein, wenn Zeiten mit niedrigem Grundleistungsbedarf verstärkt zum Batterieladen genützt werden. Gleiches gilt für tageszeitabhängige Stromtarife, sodass - vorausgesetzt die jeweilige Situation lässt dies zu - teure Tarifzeiten vermieden werden können.

Auch der Leistungsbedarf einer zu ladenden Batterie kann als zusätzliches Kriterium zum Regeln der Batterieladeleistung herangezogen werden, so wie dies durch einen weiteren Aspekt der Erfindung gegeben ist. Das Erfassen des Leistungsbedarfs kann dabei auf verschiede Weise erfolgen. So könne beispielsweise Stichcodeleser zum Einsatz kommen, welche einen auf der jeweils zu ladenden Batterie angebrachten Strichcode erfassen und die Batterieladeleistung zwischen verschiedenen Batterien mit unterschiedlichem Leistungsbedarf balancieren, sodass beispielsweise eine Batterie mit einem höheren Leistungsbedarf gegenüber einer Batterie mit einem geringeren Leistungsbedarf bevorzugt geladen wird. Der Leistungsbedarf der Batterie kann jedoch auch auf andere Weise zugänglich gemacht werden. Es können beispielsweise auch Akkumulatoren zum Einsatz kommen, die ihren jeweiligen Betriebszustand, wie beispielsweise Auf- und Entladungssequenzen protokollieren und elektronisch speichern, sodass auf Grundlage dieser gespeicherten Betriebs- oder Zustandsinformation der tatsächliche im Betrieb auftretende Leistungsbedarf ermittelt werden kann und demgemäß die Batterieladeleistung zu Gunsten einer Batterie geregelt werden kann, welche einen bedingt durch ihren jeweiligen Einsatzbereich höheren Leistungsbedarf als eine andere Batterie hat.

Zusammenfassend kann festgehalten werden, dass durch das Vorsehen der erfindungsgemäßen Maßnahmen ein zeitliches beeinflussen des Energieflusses in dem Netz bewirkt wird, wodurch ungewollte Leistungsspitzen vermieden werden können und daher auf ein Anheben des elektrischen Anschlusswertes für das Netz verzichtet werden kann. Dieser Aspekt kommt nicht nur dem Betreiber des mit elektrischer Leistung zu versorgenden Netzes, sonder auch dem dieses Netz versorgenden Energieversorgungsunternehmen zugute, welches grundsätzlich an planbaren und stabilen Lastverhältnissen in seinem Versorgungsnetz interessiert sind. Zudem kann durch die Maßnahmen der Erfindung ein nachhaltiger positiver Effekt für Flottenbetreiber erreicht werden, weil die Lebensdauer von Akkumulatoren erhöht wird, da diese generell langsamer und daher auch schonender geladen werden können. Insbesondere vernetze Lösungen können bewirken, dass die Verfügbarkeit von Fahrzeugen verbessert und die Auslastung von elektrischen Tankstellen homogenisiert wird. Für den individuellen Fahrer hat sogar die einfachste - nicht vernetzte - Lösung bereits den Vorteil, dass, soweit physikalisch vorhanden, für sein Gefährt immer eine energiespendende Steckdose frei ist und er daher nicht mit dem Problem der Suche nach freien Steckdosen oder mit dem Problem von Energiemangel konfrontiert wird. Im Zusammenhang mit vernetzten auch Fahrzeuge einbinden Lösungen können individuelle Fahrzeuge entsprechend der jeweiligen Auslastung der elektrischen Tankstellen oder dem jeweiligen Bedarf aktiv dirigiert oder geleiten werden, um eine effiziente, rasche und bedarfsgerechte Aufladung der Batterien sicherzustellen. Im Falle einer zusätzlichen Datenerhebung lassen sich auch Evaluierungen betreffen das Nutzungsverhalten der Lenker oder Analysen hinsichtlich der abgegebenen Energie an den Tankstellen oder Prognosen bzw. Simulationen bezüglich der Tankstellennutzung und Bewertung der Verfügbarkeit und Akzeptanz durchführen.

Die vorstehend angeführten Aspekte und weitere Aspekte der Erfindung werden nachfolgend mit Hilfe von exemplarischen Ausführungsbeispielen erörtert, auf welche die Erfindung jedoch nicht beschränkt ist.

Fig. 1 zeigt auf schematische Weise eine System gemäß einem Ausführungsbeispiel der Erfindung.

Fig. 2a zeigt auf schematische Weise in Form eines Diagrames ladestrombedingte Leistungsspitzen gemäß dem Stand der Technik.

Fig. 2b zeigt auf analoge Weise wie die Figur 2a die leistungsspitzen-begrenzende Wirkung der Erfindung.

Fig. 3 zeigt in Form eines Flussdiagrams ein Verfahren gemäß der Erfindung.

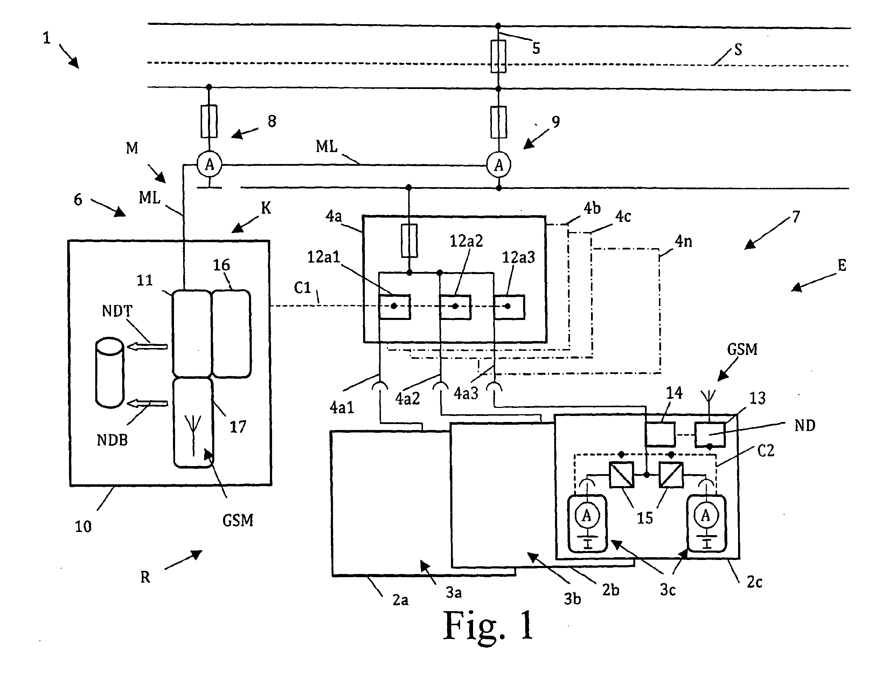

Fig. 1 zeigt auf schematische Weise eine Infrastruktur 1 für den Betrieb von elektrisch angetriebenen Fahrzeugen 2a, 2b bis 2c, wie beispielsweise von zweirädrigen Elektrofahrzeugen, Hubstaplern und Elektroautos, welche ihre für den Betrieb notwendige Energie aus weideraufladbaren Batterien bzw. Akkumulatoren 3a, 3b und 3c beziehen. Aus Gründen der Übersichtlichkeit sind in der Fig. 1 die Fahrzeuge 2a und 2b lediglich schematisch durch Umrisslinien angedeutet und im Falle des Fahrzeugs 2c lediglich die im Kontext der Erfindung interessanten Elemente visualisiert, worauf nachfolgend noch im Detail eingegangen ist.

Die Infrastruktur 1 zielt auf optimalen Benutzungskomfort und zugleich auf eine Minimierung der Infrastruktur- und Betriebskosten ab. Gegenstand der Erfindung ist es, in dieser Infrastruktur 1 die Integration von Elektrofahrzeugen 2a bis 2c und von elektrischen Tankstellen 4a bis 4n zum elektrischen Betanken solcher Elektrofahrzeuge 2a bis 2n zu einem Gesamtsystem zu erreichen, um einerseits eine optimale elektrische Ladung der Akkumulatoren 3a bis 3c der Elektrofahrzeuge 2a bis 2c und andererseits eine optimale Nutzung einer zur Verfügung stehenden elektrischen Zuleitung 5 zu den Tankstellen 4a bis 4n bzw. der dieser Zuleitung 5 zugewiesenen Maximalleistung MP zu erzielen. Die Maximalleistung (MP) ist die für das mit elektrischer Leistung zu versorgende elektrische Netz der Infrastruktur 1 definierte Anschlussleistung. Die Maximalleistung MP sei im vorliegenden Fall durch 100 kW gegeben.

In der Fig. 1 sind Energieübertragungseinrichtungen 4a1, 4a2 und 4a3 der Tankstelle 4a dargestellt, die im vorliegenden Fall durch Steckdosen gebildet sind. Es sei an dieser Stelle jedoch erwähnt, dass auch andere Mittel, die zum Energietransfer geeignet sind, zum Einsatz kommen können.

Kernelement der Erfindung ist, dass ein System 6 vorgesehen ist, das Messmittel M aufweist, die zum Messen einer elektrischen Leistungsaufnahme P in dem mit elektrischer Leistung zu versorgenden Netz der Tankstellen 4a bis 4n ausgebildet sind, und dass Regelmittel R vorgesehen sind, die zum Regeln der Intensität des Ladens der Batterien 3a bis 3c in Abhängigkeit von der gemessenen elektrischen Leistungsaufnahme P ausgebildet sind, sodass die gemessene elektrische Leistungsaufnahme P kleiner oder gleich der definierten maximalen Anschlussleistung MP des elektrischen Netzes ist. Mit Hilfe dieser Mittel M lässt sich das erfindungsgemäße Verfahren, so wie es in Fig. 3 dargestellt ist realisieren. Das Verfahren startet in einem Block V1. In einem Block V2 wird die elektrische Leistungsaufnahme P in dem mit elektrischer Leistung zu versorgenden Netz der Infrastruktur 1 gemessen. In einem Block V3 erfolgt das Regeln der Intensität des Ladens der Batterien 3a bis 3c in Abhängigkeit von der gemessenen elektrischen Leistungsaufnahme P, sodass die gemessene elektrische Leistungsaufnahme P in dem Netz kleiner oder gleich der definierten maximalen Anschlussleistung PM ist. Das Verfahren endet in einem Block V4.

In der Fig. 1 ist im vorliegenden Fall das elektrische Netz einer Betriebsstätte 7 dargestellt. Ein Bestandteil der Betriebsstätte 7 ist ein Tankstellenverbund, bei dem einerseits konventioneller Treibstoff getankt werden kann und bei elektrischen Tankstellen 4a bis 4n Akkumulatoren bzw. Batterien 3a bis 3c aufgeladen werden können. Die elektrotechnische Grenze zwischen einem allgemeinen Energieversorgungsnetz eines Energieversorgungsunternehmens und dem Netz der Betriebsstätte ist in der Fig. 1 durch die Linie S angedeutet. Das konventionelle Betanken ist in der Fig. 1 nicht im Detail dargestellt, weil es die Erfindung nicht betrifft. Die Betriebstätte 7 weist jedoch grundsätzlich zwei elektrische Verbrauchergruppen auf, nämlich einerseits die elektrischen Tankstellen 4a bis 4n und andererseits alle anderen konventionellen Verbraucher inklusive der elektrischen Pumpen für das konventionelle Betanken. Der elektrische Anschluss für diese zweite Gruppe von Verbrauchern ist symbolisch durch das Bezugzeichen 8 angedeutet. Im vorliegenden Beispiel sei angenommen, dass diese zweite Gruppe von Verbraucher je nach Benutzung bis zu 80 kW an elektrischer Leistung für ihren Betrieb benötigen können. Die elektrischen Tankstellen 4a bis 4n sind für eine Leistungsabgabe von bis zu 100 kW ausgelegt, was durch das Bezugszeichen 9 symbolisiert ist. Daher würde bei einem gleichzeitigen maximalen Leistungsbedarf bei den konventionellen Verbrauchen und bei den elektrischen Tankstellen ohne das Vorsehen der erfindungsgemäßen Maßnahme die Anschlussleistung von 100 kW bei weitem überschritten werden.

Um dem entgegen zu wirken messen die Messmittel M die durch die konventionellen Verbraucher und die elektrischen Tankstellen 4a bis 4n verursachte Leistungsaufnalime P in dem Netz der Betriebsstätte 7. Die Messmittel M sind nicht weiter ausgeführt, da ihre Realisierung und das Zugänglichmachen der von ihnen ermittelten Werte dem Fachmann bekannt ist. Das Verfügbarmachen der Messwerte ist durch eine Verbindungslinie ML mit einem Computer 10 dargestellt.

Im vorliegenden Fall sind die Regelmittel R teilweise durch den Computer 10 realisiert auf dem eine erste Applikation 11 ausgeführt wird. Da das Laden der Batterien 3a bis 3c bzw. das Regeln der Intensität des Ladens im jeweiligen Fahrzeug 2a bis 2c erfolgt, ist eine Kommunikation mit den Fahrzeugen 2a bis 2c nötig. Um diese Kommunikation zu realisieren kommuniziert der Computer 10 leitungsgebunden über die einzelnen Tankstellen 4a bis 4n hinweg mit den Fahrzeugen 2a bis 2c, was durch die unterbrochene Linie C1 visualisiert ist, und regelt mit Hilfe der ersten Applikation 11 deren aufsummierte Ladeleistung derart, dass die mit der Betriebsstätte 7 assoziierte Anschlussleistung MP von 100 kW nicht überschritten wird.

Um die Kommunikation zwischen der ersten Applikation 11 und den Fahrzeugen 2a bis 2n zu gewährleisten ist die Tankstelle 4a mit Modems 12a1 bis 12a3 ausgerüstet, welche ein Kommunizieren mit dem jeweiligen Fahrzeug 2a bis 2c unter Ausnutzung der elektrischen Versorgungsleitung zwischen Tankstelle 4a und Fahrzeug 2a, 2b oder 2c erlauben.
Auch die Elektrofahrzeuge 2a bis 2c sind speziell ausgerüstet, was nachfolgend mit Hilfe des Elektrofahrzeugs 2c näher erläutert ist. Das Elektrofahrzeug 2c weist eine zentrale Steuereinheit 13 auf, die zum Speichern und Zugänglichmachen von Nutzungsdaten ND betreffend die Nutzung der Akkumulatoren 3c oder des Fahrzeugs 2c verwendet wird, woraus sich mit Hilfe der ersten Applikation 11 ein Leistungsbedarf für z.B. die Batterie 3c ermitteln lässt. Um die Nutzungsdaten ND zugänglich zu machen verfügt die Steuereinheit 13 über Kommunikationsmöglichkeiten, wie beispielweise drahtlose Kommunikation in Form von Mobilfunk (GSM oder ähnlichen Technologien) oder in Form von drahtgebundener Kommunikation in Form von einem Modem 14, das zum Kommunizieren über eine elektrische Ladeleitung mit dem korrespondierenden Modem 12a3 der Tankstelle 4a vorgesehen ist. Im Fall der drahtlosen Kommunikation verfügt auch der Computer 10 über entsprechende Kommunikationsmittel.

Der Computer 10 bzw. die erste Applikation 11 zusammen mit den jeweiligen Kommunikationsmitteln 12a3 und 14 und der Steuereinheit 13 bilden Erfassungsmittel E, die zum Erfassen des Leistungsbedarfs der zu ladenden Batterie 3n ausgebildet sind. Der ermittelte Leistungsbedarf wird in Folge beim Regeln der Batterieladeintensität zusätzlich berücksichtigt, sodass Elektrofahrzeuge, die beispielsweise einen höheren Leistungsbedarf als andere Elektrofahrzeuge haben, beim Laden ihrer Batterien bevorzugt behandelt werden.

Das Fahrzeug 2c weist weiters Wandler 15 auf, die zum Wandeln des von der Tankstelle 4a zugeführten Wechselstroms in Gleichstrom, mit dem die Akkumulatoren 3c geladen werden, ausgebildet sind. Die Wandler 15 sind kommunikativ mit der Steuereinheit 13 verbunden, sodass der Ladestrom bzw. die Batterieladeintensität oder Ladeleistung mit Hilfe der Steuereinheit 13 gesteuert / geregelt werden kann. Dies ist durch eine unterbrochene Linie C2 dargestellt. Die Steuereinheit 13 und der Wandler 15 bilden ein Batterieladegerät. Der Computer 10 bzw. die Applikation 11 zusammen mit den Kommunikationsmitteln 12a3 und 14, der Steuereinheit 13 und den Wandlern 15 bilden im vorliegenden Fall die Regelmittel R gemäß der Erfindung. Die bei dem Regeln zu berücksichtigende maximale Anschlussleistung PM ist dabei dem Computer 10 bzw. der Applikation 11 bekannt.

Im Fall von tageszeitabhängigen Verrechnungsmodellen für die Bereitstellung von elektrischer Energie oder im Fall von tageszeitabhängigen Auslastungsschwankungen hat es sich weiters als vorteilhaft erwiesen, wenn die erste Applikation 11 die Tageszeit beim Regeln der Batterieladeintensität berücksichtigt.

In einer weiteren Ausbildungsform der Erfindung kann vorgesehen sein, dass eine zweite Applikation 16 auf dem Computer 10 ausgeführt wird, mit deren Hilfe die Nutzungsdaten ND für ein Flottenmanagement von Elektrofahrzeugen 2a bis 2n einsetzbar sind. Die zweite Applikation 16 realisiert Koordinationsmittel K, die zum koordinieren von Ladezeit - im Sinne von Start und Endzeit oder Ladedauer - und Ladeort für eine Batterie ausgebildet sind. Damit lassen sich individuell Elektrofahrzeuge 2a bis 2c, die beispielsweise zu einem Fuhrpark eines Betriebes gehören oder den Individualverkehr bilden, zum richtigen bzw. optimalen Zeitpunkt und / oder für die richtige bzw. optimale Zeitdauer zu derjenigen Tankstelle 4a, 4b, 4c bzw. 4n dirigieren, welche die zu den Nutungsdaten ND korrespondierende optimale Batterieladeintensität bzw. Ladeleistung auf planbare Weise bereitstellen kann, ohne dass eine mit dem jeweiligen Netz assoziierte Anschlussleistung MP überschritten wird.

In einer weiteren Ausbildungsform der Erfindung können die auszuwertenden Nutzungsdaten ND in zwei Klassen unterteilt sein, nämlich in Nutzungsdaten betreffend die Tankstelle NDT und in Nutzungsdaten betreffend die Batterie NDB des jeweiligen Elektrofahrzeuges 2a, 2b oder 2c. Die Auswertung dieser zwei Klassen kann einerseits für eine Optimierung der Leistungsverteilung bei den jeweiligen Tankstellen 4a bis 4n und andererseits für das Flottenmanagement oder bei Aspekten der Optimierung des elektrofahrzeugbasierten Individualverkehrs eingesetzt werden. Gemäß dieser Variante werden die tankstellenbezogenen Nutzungsdaten NDT über die mit C 1 gekennzeichnete Kommunikationsmöglichkeit und die batteriebezogenen Nutzungsdaten NDB z.B. über ein GSM-Kommunikationsmodul 17 bereitgestellt. Auswertungsmittel könne beispielsweise durch den Computer 10 realisiert sei.

Ein weiterer Aspekt der Erfindung betrifft das Beachten von Prioritäten bei der Bereitstellung von Batterieladeintensität. So kann beispielsweise vorgesehen sein, dass Einsatzfahrzeuge gegenüber dem Individualverkehr eine höhere Priorität haben. Solche Fahrzeuge könne sich beispielsweise beim Einfahren in die Tankstelle 4a bis 4n anmelden oder bei der jeweiligen Energieübertragungs-einrichtung 4a1 bis 4a3 mit Hilfe von nicht dargestellten Prioritätserfassungsmitteln erfasst werden. Dies kann durch ein Erfassen der Nummernschilder oder eines anderen Identifikationsmerkmales erfolgen. Es kann jedoch auch vorgesehen sein, dass sich der Fahrer mit einer Chipkarte identifiziert und die ihm zugewiesene Priorität mit Hilfe des Computers 10 ermittelt wird. Die Regelmittel R behandeln diesen Fall derart, dass sie das Laden der in dem Einsatzfahrzeug eingebetteten Batterie beispielsweise mit der maximalen für diese Batterie zulässigen Ladeintensität oder unter einem anderen Gesichtspunkt, wie etwa maximierter Lebensdauer der Batterie, durchführen und die Batterieladeintensität für die anderen gleichzeitig zu ladenden Batterien dementsprechend reduziert wird. Dabei kann die bevorzugt zu ladenden Batterie so behandelt werden, als ob sie Teil der konventionellen, also durch die Regelmittel R nicht zu beeinflussenden Verbraucher ist. Für den Fall, dass bei einem solchen Verfahren eine Überschreitung der Anschlussleistung PM droht, kann das Laden von Batterien mit niederer Priorität ausgesetzt oder letztendlich, wenn selbst diese Maßnahme nicht ausreichend ist, der Ladestrom für die Batterie mit hoher Priorität reduziert bzw. geregelt werden, um ein Überschreiten der Anschlussleistung PM zuverlässig zu verhindern.

In einer Netzkonfiguration innerhalb der Infrastruktur 1 kann vorgesehen sein, dass jeder der Tankstellen 4a bis 4n für sich genommen eine untergeordnete maximale Anschlussleistung zugewiesen ist. Dies kann bei größeren Betriebsgeländen vorgesehen sein, bei denen es elektrotechnisch Sinn macht, die innerbetriebliche Energieversorgung zu segmentieren. In so einem Fall können die Messmittel M und die Regelmittel R so ausgebildet sein, dass sie die einzelnen Infrastrukturbereiche individuell behandeln.

In einer weiteren Ausbildungsform der Erfindung kann vorgesehen sein, dass jede der Tankstellen 4a bis 4n in unterschiedlichen Versorgungsgebieten lokalisiert oder unterschiedlichen Versorgungsnetzen zugeordnet sind. In so einem Fall, wenn es sich also um eine komplexere Energieversorgungsnetzstruktur als die in der Figur 1 dargestellte handelt, bei der mehrere Versorgungsnetzanbindungen mit voneinander abweichenden Anschlussleistungen vorliegen und die Versorgungsnetzanbindungen gegebenenfalls durch unterschiedliche Energieversorgungsunternehmen bereitgestellt werden, kann die Messung der Leistungsaufnahme für jedes der betroffenen Netze durchgeführt und die Regelung der Bätterieladeintensität auf die jeweils vorliegenden Leistungsaufnahme und die in dem jeweiligen Netz zur Verfügung stehende Anschlussleistung MP abgestimmt werden. Je nach Gegebenheit kann dies zentral oder dezentral über vernetze Computer erfolgen.

Zusammenfassend ist festzuhalten, dass die Erfindung Synergien in der Infrastruktur bewirkt, die von einer gesteigerten Lebensdauer der Akkumulatoren, einer besseren Kenntnis ihrer Nutzung, über eine optimale Nutzung der bestehenden elektrischen Anschlusswerte bei den Tankstellen bis hin zu einer verbesserten Planbarkeit des Energieverbrauchs auf Seiten der Energieversorgungsunternehmen reichen.

Im Bereich des Flottenmanagements ergeben sich im Detail Vorteile hinsichtlich der möglichst langen Nutzungsdauer der Batterien bzw. Akkumulatoren unter Benutzung bzw. Auswertung der Nutzungsprofile der Akkumulatoren und Anwendung von darauf abgestimmten Ladestrategien. Weiters stehen Informationen betreffend die Energieeffizienz, die durch die Nutzungsweise des Fahrzeugs resultiert, zur Verfügung. Daraus lassen sich Strategien zur optimalen Nutzung des Fahrzeugs unter den gegebenen tätigkeitsbezogenen Einschränkungen ableiten. Dies summarisch betrachtet führt zu möglichst geringen Betriebskosten.

Für den individuellen Fahrer ergeben sich die Vorteile im Bereich der raschen Auffindbarkeit bzw. Verfügbarkeit der nächsten Aufladestelle bzw. Tankstelle, was summarisch zu generell verkürzten oder situationsbedingt angepassten Ladezeiten / Tankzeiten führt, was folglich im betriebswirtschaftliche Kontext einen effizienteren Personaleinsatz zur Folge haben kann und im privaten Sektor eine gesteigerte Lebensqualität bewirken kann.

Auf Seiten der Energieversorgungsunternehmen ergibt sich vorteilhaft eine bessere Planbarkeit des Energieverbrauchs weil unplanbare Energieversorgungsspitzen vermieden werden, was in der Fig. 2 in Form eines Diagramms schematisch dargestellt ist. Die Fig. 2b zeigt wie sich die maximale Anschlussleistung PM überschreitende Leistungsspitzen, die durch das Aufladen von Batterien entstehen können , durch das Vorsehen der erfindungsgemäßen Maßnahmen vermeiden lassen. Im Detail ist in Fig. 2a eine typische Situation mit Überschreitung der Maximalleistung PM ohne den Einsatz der erfindungsgemäßen Maßnahmen dargestellt. Dabei addiert sich zu der Leistungsaufnahme verursacht durch die konventionellen Verbraucher, also die Grundlast, welche mit Hilfe der durchgezogenen Linie dargestellt ist, die Batterieladeleistung zur gesamten Leistungsaufnahme in dem Netz, welche mit Hilfe der strichpunktierten Linie dargestellt ist. Im Vergleich dazu - so wie dies in Fig. 2b dargestellt ist - ist durch die die Gesamtleistungsaufnahme in dem Netz berücksichtigende Regelung des Batterieladestroms die den Anschlusswert PM überschreitende Leistungsspitze vermieden. Dies wiederum ermöglicht es einem Energieversorgungsunternehmen möglichst günstig elektrische Energie anzubieten. Weiters ist von möglichst geringen Infrastrukturkosten (Errichtungs- und Betriebskosten) betreffend die elektrische Anbindung von Tankstellennetzen auszugehen, weil auf bestehende Anschlusssysteme und elektrische Netze der Tankstellen zurückgegriffen werden kann.

An dieser Stelle sei erwähnt, dass das Realisieren der Regelmittel R nicht an den Computer 10 gebunden sein muss. Vielmehr lassen sich äquivalent funktionierende Regelmittel R auch durch integrierte Halbleiterbausteine, wie beispielsweise Application-Specific-ICs realisieren, die verteilt bei den jeweiligen Tankstellen 4a bis 4n lokalisiert sind und miteinander kommunizieren. Summarisch betrachtet lassen sich die zuvor erwähnten Aspekte grundsätzlich auch in einer dezentral organisierten Infrastruktur 1 erreichen. Gleiches gilt auf analoge Weise für die Messmittel M. Daher sind auch Lösungen im erfindungsgemäßen Konzept umfasst, welche eine teilweise oder vollständige Integration von funktionalen Elementen der Messmittel M und/oder der Regelmittel R in einem Modul innerhalb einer Tankstelle oder sogar in intelligenten miteinander kommunizierender Batterie- bzw. Akkumulatormodule erlauben.

Weiters sei erwähnt, dass, obwohl die Batterien 3c losgelöst von der Steuereinheit 13 und den Kommunikationsmitteln 14 dargestellt wurden, auch eine vollständig integrierte oder teilintegrierte Lösung in Form von intelligenten Batteriemodulen vorliegen kann, welche alle Elemente 3c, 13, 14, 15 und C2 oder nur Teile davon umfassen kann. Es kann auch vorgesehen sein dass solche Module von den Fahrzeugen 2a bis 2c entnehmbar sind und zum elektrischen Laden bei den Tankstellen 4a bis 4n deponiert werden.

Als ein weiterer Aspekt kann vorgesehen sein, dass die Kommunikation zwischen Tankstelle und Fahrzeug bzw. Batteriemodul nicht über drahtgebundene Maßnahmen, sondern über drahtlose Maßnahmen realisiert ist.

Auch wenn in den vorangehend beschriebenen Aspekten immer zwei Batterien bzw. Akkumulatoren in einem Fahrzeug dargestellt wurden, sei an dieser Stelle erwähnt, dass diese Anzahl letztendlich beliebig gewählt werden kann, was auf analoge Weise auch auf Batterie- bzw. Akkumulatormodule zutrifft. Letztendlich ist die Erfindung auch im Privatbereich, wie beispielsweise bei Einfamilien- oder Mehrfamilienhäusern oder bei Wohnblöcken einsetzbar.

Diese und weitere Aspekte der Erfindung ergeben sich für den Fachmann durch das Studium der vorangehend offenbarten Ausführungsbeispiele, sodass die Erfindung nicht auf diese Ausführungsbeispiele beschränkt ist, die entsprechend der jeweiligen Situation auch miteinander kombiniert werden können. Die Maßnahmen der Erfindung können gänzlich oder teilweise mit Hilfe von einem Computerprogramm realisiert sein, welches auf einem Computer ausgeführt wird, wobei das erfindungsgemäße Verfahren zur Anwendung kommt.

Die Verwendung der Einzahl soll die Mehrzahl nicht ausschließen, was auch im ungekehrten Sinn zu gelten hat, soweit nichts Gegenteiliges offenbart ist.

## Patentansprüche

1. System (6) zum Regeln der Leistung des Ladens einer Batterie (3a - 3c) in einem elektrischen Netz, für das eine maximale Anschlussleistung definiert ist, wobei das System (6) folgendes aufweist:
- Messmittel (M), die zum Messen einer elektrischen Leistungsaufnahme (P) in dem mit elektrischer Leistung zu versorgenden Netz ausgebildet sind,
- Regelmittel (R), die zum Regeln der Leistung des Ladens der Batterie (3a - 3c) in Abhängigkeit von der gemessenen elektrischen Leistungsaufnahme (P) ausgebildet sind, sodass die gemessene elektrische Leistungsaufnahme (P) in dem Netz kleiner oder gleich der definierten maximalen Anschlussleistung (PM) ist, **dadurch gekennzeichnet, dass**
- Erfassungsmittel (E), die zum Erfassen von Nutzungsdaten (ND) betreffend die Nutzung der jeweils zu ladenden Batterie (3a - 3c) oder eines die zu ladende Batterie (3a - 3c) aufweisenden Fahrzeugs (2a - 2c) ausgebildet sind,
wobei die Regelmittel (R) zum Berücksichtigen der Nutzungsdaten (ND) für die zeitliche Beeinflussung des Energieflusses in dem elektrischen Netz zur Vermeidung von Leistungsspitzen ausgebildet sind.

2. System nach Anspruch 1, **dadurch gekennzeichnet, dass** die Regelmittel (R) zum Regeln der Leistung des Ladens der Batterie (3a - 3c) in Abhängigkeit von der gemessenen elektrischen Leistungsaufnahme (P) eine Proportionalregelung umfassen.

3. System nach Anspruch 1 oder 2, wobei die Prioritätenerfassungsmittel vorgesehen sind, die zum Erfassen einer Priorität ausgebildet sind, wobei die Priorität der zu ladenden Batterie (3a - 3c) oder einem Fahrzeug (2a - 2c), welches die zu ladende Batterie (3a - 3c) aufweist, zugewiesen ist, und wobei die Regelmittel (R) zum Berücksichtigen der erfassten Priorität ausgebildet sind.

4. System nach einem der vorangehenden Ansprüche 1 bis 3, wobei die Regelmittel (R) zum Berücksichtigen der Tageszeit ausgebildet sind.

5. System nach einem der vorangehenden Ansprüche 1 bis 4, wobei Erfassungsmittel (E) vorgesehen sind, die zum Erfassen des Leistungsbedarfs der zu ladenden Batterie (3a -3c) ausgebildet sind, und wobei die Regelmittel (R) zum Berücksichtigen des Leistungsbedarfs der jeweiligen zu ladenden Batterie (3a - 3c) ausgebildet sind.

6. System nach einem der vorangehenden Ansprüche 1 bis 5, wobei Ausweitungsmittel vorgesehen sind, die zum Auswerten der Nutzungsdaten (ND) ausgebildet sind, und wobei Koordinierungsmittel (K) vorgesehen sind, die in Abhängigkeit von den ausgewerteten Nutzungsdaten (ND) zum Koordinieren von Ladezeit und/oder Ladeort für eine Batterie (3a - 3c) ausgebildet sind.

7. Verfahren zum Regeln der Leistung des Ladens einer Batterie (3a - 3c) in einem elektrischen Netz, für das eine maximale Anschlussleistung (PM) definiert ist, welches Verfahren die nachfolgend angeführten Schritte aufweist, nämlich:
- Messen (V2) einer elektrischen Leistungsaufnahme (P) in dem mit elektrischer Leistung zu versorgenden Netz,
- Regeln (V3) der Leistung des Ladens der Batterie (3a - 3c) in Abhängigkeit von der gemessenen elektrischen Leistungsaufnahme (P), sodass die gemessene elektrische Leistungsaufnahme (P) in dem Netz kleiner oder gleich der definierten maximalen Anschlussleistung (PM) ist, **dadurch gekennzeichnet, dass**
- Sammeln von Nutzungsdaten (ND) betreffend die Nutzung der jeweils zu ladenden Batterie (3a - 3c) oder eines die zu ladende Batterie (3a - 3c) aufweisenden Fahrzeugs (2a - 2c), wobei das Regeln (V3) in Abhängigkeit von den Nutzungsdaten (ND) durch die zeitliche Beeinflussung des Energieflusses in dem elektrischen Netz zur Vermeidung von Leistungsspitzen erfolgt.

8. Verfahren nach Anspruch 7, **dadurch gekennzeichnet, dass** das Regeln (V3) der Leistung des Ladens der Batterie (3a - 3c) in Abhängigkeit von der gemessenen elektrischen Leistungsaufnahme (P) eine Proportionalregelung umfasst.

9. Verfahren nach Anspruch 7 oder 8, wobei das Regeln (V3) in Abhängigkeit von einer Priorität erfolgt, die der zu ladenden Batterie (3a - 3c) oder einem Fahrzeug (2a - 2c), welches die zu ladende Batterie (3a - 3c) aufweist, zugewiesen ist.

10. Verfahren nach einem der vorhergehenden Ansprüche 7 bis 9, wobei das Regeln (V3) in Abhängigkeit von der Tageszeit erfolgt.

11. Verfahren nach einem der vorangehenden Ansprüche 7 bis 10, wobei der Leistungsbedarf der zu ladenden Batterie (3a - 3c) erfasst wird und das Regeln (V3) in Abhängigkeit vom erfassten Leistungsbedarf erfolgt.

12. Verfahren nach nach einem der vorangehenden Ansprüche 7 bis 11, wobei die Nutzungsdaten (ND) ausgewertet werden und basierend auf der Auswertung Ladezeiten und/oder Ladeort zum Laden der Batterie (3a - 3c) koordiniert werden.

## Claims

1. A system (6) for controlling the power of charging a battery (3a-3c) in an electrical network, for which a maximum connected load is defined, with the system (6) comprising:
- measuring means (M) designed for measuring an electrical power consumption (P) in the network to be supplied with electrical power,
- controlling means (R) designed for controlling the power of charging the battery (3a-3c) as a function of the electrical power consumption (P) measured so that the measured electrical power consumption (P) in the network is smaller than or equal to the maximum connected load (PM) which has been defined,
**characterized by**
- detecting means (E) designed for detecting usage data (ND) relating to the usage of the respective battery (3a-3c) to be charged or of a vehicle (2a-2c) provided with the battery (3a-3c) to be charged,
wherein the controlling means (R) are designed for taking into account the usage data (ND) for temporally influencing the energy flow in the electrical network in order to avoid power peaks.

2. A system according to claim 1, **characterized in that** the controlling means (R) for controlling the power of charging the battery (3a-3c) as a function of the electrical power consumption (P) measured comprise a proportioning control.

3. A system according to claim 1 or 2, wherein priority-detecting means are provided which are designed for detecting a priority, wherein the priority is allocated to the battery (3a-3c) to be charged or to a vehicle (2a-2c) provided with the battery (3a-3c) to be charged and wherein the controlling means (R) are designed for taking into account the detected priority.

4. A system according to any of the preceding claims 1 to 3, wherein the controlling means (R) are designed for taking into account the time of day.

5. A system according to any of the preceding claims 1 to 4, wherein detecting means (E) are provided which are designed for detecting the power demand of the battery (3a-3c) to be charged and wherein the controlling means (R) are designed for taking into account the power demand of the respective battery (3a-3c) to be charged.

6. A system according to any of the preceding claims 1 to 5, wherein evaluating means are provided which are designed for evaluating the usage data (ND) and wherein coordinating means (K) are provided which are designed for coordinating charging time and/or charging place for a battery (3a-3c) as a function of the evaluated usage data (ND).

7. A process for controlling the power of charging a battery (3a-3c) in an electrical network, for which a maximum connected load (PM) is defined, which process comprises the steps indicated below, namely:
- measuring (V2) an electrical power consumption (P) in the network to be supplied with electrical power,
- controlling (V3) the power of charging the battery (3a-3c) as a function of the electrical power consumption (P) measured so that the measured electrical power consumption (P) in the network is smaller than or equal to the maximum connected load (PM) which has been defined,
**characterized by**
- the collection of usage data (ND) relating to the usage of the respective battery (3a-3c) to be charged or of a vehicle (2a-2c) provided with the battery (3a-3c) to be charged,
wherein controlling (V3) occurs as a function of the usage data (ND) by temporally influencing the energy flow in the electrical network in order to avoid power peaks.

8. A process according to claim 7, **characterized in that** controlling (V3) the power of charging the battery (3a-3c) as a function of the electrical power consumption (P) measured comprises a proportioning control.

9. A process according to claim 7 or 8, wherein controlling (V3) occurs as a function of a priority which is allocated to the battery (3a-3c) to be charged or to a vehicle (2a-2c) provided with the battery (3a-3c) to be charged.

10. A process according to any of the preceding claims 7 to 9, wherein controlling (V3) occurs as a function of the time of day.

11. A process according to any of the preceding claims 7 to 10, wherein the power demand of the battery (3a-3c) to be charged is detected and controlling (V3) occurs as a function of the detected power demand.

12. A process according to any of the preceding claims 7 to 11, wherein the usage data (ND) are evaluated and, based on the evaluation, the charging times and/or charging place are coordinated for charging the battery (3a-3c).

## Revendications

1. Système (6) de réglage de la puissance du chargement d'une batterie (3a-3c) sur un réseau électrique pour lequel une puissance de raccordement maximale est définie, le système (6) présentant ce qui suit :
- des moyens de mesure (M) qui sont conçus pour la mesure d'une puissance électrique consommée (P) dans le réseau à approvisionner en puissance électrique,
- des moyens de réglage (R) qui sont conçus pour la réglage de la puissance de chargement de la batterie (3a-3c) en relation avec la puissance (P) électrique consommée mesurée de sorte que la puissance (P) électrique consommée mesurée dans le réseau est inférieure ou égale à la puissance de raccordement (PM) définie maximale
**caractérisé en ce que**
- des moyens de détection (E) qui sont conçus pour la détection de données d'utilisation (ND) concernant l'utilisation de la batterie respective à charger (3a-3c) ou l'utilisation du véhicule (2a-2c) admettant la batterie à charger (3a-3c),
les moyens de réglage (R) pour tenir compte des données d'utilisation (ND) étant conçus pour exercer par moments une influence sur le flux d'énergie dans le réseau électrique afin d'éviter des pics de puissance.

2. Système selon la revendication 1 **caractérisé en ce que** les moyens de réglage (R) pour le réglage de la puissance de chargement de la batterie (3a-3c) intègrent un réglage proportionnel en fonction de la puissance électrique consommée (P) mesurée.

3. Système selon les revendications 1 ou 2, des moyens de détection prioritaires étant prévus, qui sont conçus pour la détection d'une priorité, où la priorité est attribuée à la batterie à charger (3a-3c) ou à un véhicule (2a-2c) qui admet la batterie à charger (3a-3c) et où les moyens de réglage (R) sont conçus pour prendre en considération la priorité détectée.

4. Système selon l'une des revendications précédentes de 1 à 3 où les moyens de réglage (R) sont conçus pour prendre en considération l'heure dans la journée.

5. Système selon l'une des revendications précédentes de 1 à 4 où des moyens de détection (E) sont prévus, qui sont conçus pour la détection du besoin en puissance de la batterie (3a-3c) à charger et où les moyens de réglage (R) sont conçus pour prendre en compte de la puissance absorbée par la batterie à charger (3a-3c) respective.

6. Système selon l'une des revendications précédentes de 1 à 5 où des moyens d'évaluation sont conçus pour l'évaluation des données d'utilisation (ND) et où des moyens de coordination (K) sont prévus pour la coordination de la durée de chargement et/ou de l'endroit de chargement pour une batterie (3a-3c) en fonction des données d'utilisation (ND) évaluées.

7. Procédé de réglage de la puissance du chargement d'une batterie (3a-3c) sur un réseau électrique, pour lequel une puissance de raccordement (PM) maximale est définie, lequel procédé présente les étapes indiquées suivantes, à savoir :
- la mesure (V2) d'une puissance électrique consommée (P) dans le réseau approvisionnant avec la puissance électrique,
- le réglage (V3) de la puissance du chargement de la batterie (3a-3c) en fonction de la puissance électrique consommée (P) mesurée de sorte que la puissance électrique consommée (P) dans le réseau est inférieure ou égale à la puissance de raccordement (PM) maximale définie,
**caractérisé en ce que**
- la collecte de données d'utilisation (ND) concernant l'utilisation de la batterie à charger (3a-3c) ou d'un véhicule (2a-2c) admettant la batterie à charger (3a-3c), respectivement, le réglage (V3) s'effectuant en fonction des données d'utilisation (ND) par lesquelles se produit l'influence momentanée du flux d'énergie dans le réseau électrique pour éviter des pointes de puissance.

8. Procédé selon la revendication 7 **caractérisée en ce que** le réglage (V3) de la puissance du chargement de la batterie (3a-3c) en fonction de la puissance électrique consommée (P) comprend un réglage proportionnel.

9. Procédé selon les revendications 7 ou 8 où le réglage (V3) s'effectue en fonction d'une priorité qui prend en compte la batterie à charger (3a-3c) ou un véhicule (2a-2c) qui admet la batterie à charger (3a-3).

10. Procédé selon l'une des revendications précédentes de 7 à 9 où le réglage (V3) s'effectue en fonction de l'heure dans la journée.

11. Procédé selon l'une des revendications précédentes de 7 à 10, où la puissance absorbée de la batterie à charger (3a-3c) est évalué et où le réglage (V3) s'effectue en fonction de la puissance absorbée évaluée.

12. Procédé selon l'une des revendications précédentes de 7 à 11, où les données d'utilisation (ND) sont évaluées et sont coordonnées en se basant sur l'évaluation des durées de chargement et/ou de l'endroit de chargement pour le chargement de la batterie (3a-3c).
